# EUROPEAN PATENT SPECIFICATION

(11) **EP 1 265 447 B1**
(45) Date of publication and mention of the grant of the patent: **24.08.2005**
(21) Application number: 02012183.6
(22) Date of filing: 03.06.2002
(51) Int. Cl.: H04Q 7/22, H04L 12/28

(54) **System for providing information services in exhibition context, related transmitter device and computer product**
System zur Bereitstellung von Informationsdiensten in einer Ausstellungsumgebung, diesbezügliches Übertragungsgerät und Computerprodukt
Système pour fournir des services d'information dans un contexte d'expositions, dispositif émetteur associé et produit informatique

(30) Priority: 08.06.2001 IT TO20010554
(43) Date of publication of application: 11.12.2002
(73) Proprietor: Telecom Italia S.p.A., 20123 Milano (IT)
(72) Inventor: Brosio, Alberto, c/o Telecom Italia Lab S.p.A., 10148 Torino (IT); Guglielmo, Mario, c/o Telecom Italia Lab S.p.A., 10148 Torino (IT)
(74) Representative: Giannesi, Pier Giovanni

(56) References cited:
- WO-A-01/01711
- WO-A-01/31619
- WO-A-01/44831
- US-A- 5 732 326
- US-A- 5 796 351

## Description

### Technical Field

The present invention relates to systems for providing information services in exhibition contexts.
The invention was developed with particular attention to its possible application to the provision of information services pertaining to museum, architectural, and scenery attractions.

### Background Art

In the prior art, services (such as the OmniArte service offered by Omnitel) are already known which allow the user of a mobile telephone to receive through the network whereto the telephone is connected messages aimed at describing the relevant aspects from the scenery, architectural and environmental viewpoint of the user's current location.

It is not generally necessary for the user to provide any information about his/her position, which is identified automatically by the locating service active for the mobile telephones that use the network. In particular, the described service associates the position of the user to a site with tourist relevance whereof a description exists in a service centre, and sends the related voice message to the mobile telephone. If the area is not covered by the service or - for any reason - no descriptions pertaining to the site in question are available, then the user is notified with a corresponding voice message.

This known solution suffers from some inherent limitations.

In the first place, the locating system used allows to identify the user's position only with a rather wide margin of uncertainty (for instance in the order of hundreds of metres). Hence, it is not possible to provide specific descriptions of relevant objects of small dimensions, such as statues, frescoes, etc.

Secondly, the user who activates the service has no way of knowing if and when, varying his/her position, he/she may access a new description.
Moreover, the service is available only for the user of a particular operator. Additionally, the service is intrinsically closed, in that the user can only listen to a single description provided by the operator's service centre and, in practice, he/she has no chance to choose alternative descriptions.

### Disclosure of the Invention

US 5,796,351 Discloses a system for providing information (information messages) about exhibition objects of a museum or the like wherein an object communication unit or device, associated to the work, transmits a code for identifying the work (work identifying code) through a mobile terminal to a host computer having a data base. The host computer and the data base are locally coupled to the exhibition objects.

US 5,732,326 discloses a system similar to D1 wherein a user of the mobile terminal is able to select the language and/or the message information depth associated to the work identifying code.

WO 01/44831 A1 discloses a system for providing information messages about exhibition objects of a museum or the like wherein the host computer or control system includes into the data base both the work identifying code and an information regarding the location of the device associated to the work.

All the above documents present the problem that the work and the corresponding work identifying code are coupled to the location wherein the work is located.

WO 01/01711 A1 discloses a communication system including an information source and a broadcasting device coupled to the information source for broadcasting information within the broadcast area.

WO 01/31619 A1 discloses a method for transmitting location specific information to a mobile receiving unit entering a restricted area.

The aim of the present invention is to provide a solution that is able to overcome the drawbacks described above.

According to the present description, said aim is achieved thanks to a system having the characteristics specifically set out in the claims that follow.

Object of present invention is to solve the problem of known prior art by making decoupled the work and the corresponding work identifying code from the location wherein the work is located.

The invention further pertains, autonomously, to the device able to be associated to a single "work" within said system, as well as the computer product able to be loaded into the memory of a mobile terminal included in a system according to the invention and comprising portions of software code which, when the computer product is made to run on said mobile terminal, configures the mobile terminal for operation within a system according to the invention.

In essence, the solution according to the invention allows individually to listen to a description of a critical comment pertaining, for instance, to a work of art, a monument or a scenery through a portable terminal. The aforesaid terminal (which may be replaced, for example, by a mobile telephone) is able to receive and reproduce the information transmitted by a remote server and pertaining to a specific work exploiting an information item - such as a code - that uniquely identifies the described object.

The identifier code is provided by a device that is associated to the work and is able directly to provide the portable terminal, for example, with the address of the remote site whereto it needs to connect in order to obtain the comment. The portable terminal may use the address of the remote site provided by the aforementioned device, but it can also ignore this second information item to access, for instance, the description of the work contained on a memory device of the terminal itself, or the information can be retrieved from a remote site, but at a different address from the one provided by the device and defined autonomously by the terminal.

The term "work" is used herein to indicate in general a work of art in the strict sense (for instance a painting, a sculpture, etc.), as well as a monument or building or urban site (street, square, etc.), and a geographic location (neighbourhood, scenic view, mountains, etc.) about which a description is provided.

Preferably, the codes corresponding to the work and to the location of the corresponding information message are provided to the mobile terminal by means of a signal such as an optical signal, or a signal within the typical band of wireless LANs. The device associated with the work provides this information upon interrogation of the mobile terminal following the transmission of a signal in the same band by the mobile terminal. Once it receives this information, the terminal connects (automatically or upon the user's command) to the server of the service provider which receives a voice message that is reproduced by the receiving terminal.

The mobile terminal can be such as to allow more advanced usage modes, for instance by providing a description in multimedia form (voice plus image and/or video) illustrating the work.

As a possible alternative, instead of a voice message, the message sent by the provider to the mobile user terminal is constituted by a text string able to be visualised on a display and/or processed by voice synthesis application from text present on the terminal and hence heard by the user as a voice message.

It is also possible to integrate in the user terminal a memory device (flash memory or memory stick or hard disk or others), causing the database containing the description of the works to be local to the user terminal. At this point, the terminal no longer need be a terminal of a mobile telecommunication network: the provider's server component is then eliminated from the system, since the application resides on the terminal memory and not (as was the case when the terminal itself is a mobile telephone) on its SIM.

As an additional variation, it is possible to provide for the transmitter device associated to the individual work to be active not upon interrogation by the mobile terminal but continuously.

The code associated with the work can be proprietary or simply conform to a determined standard. The standard may allow different service providers to give mutually alternative and/or complementary descriptions of the same work.

Additionally, multiple information levels can be provided (concise, standard, extensive description), with the ability for the user to select one.

As stated previously, the user terminal need not be a mobile terminal, since it is sufficient for it to be a terminal with the ability to access, decode and present multimedia contents, possibly comprising also e-commerce functions.

The service can be facilitated by the inclusion of a specific key on the user terminal for transmitting the interrogation aimed at obtaining the provision of the code for the work and for the location of the related description. The transmitter device can also be associated to the individual work not only in terms of location in the vicinity thereof, but also by effect of an actual connection, obtained for instance by mounting the transmitter device on or in the frame of the work (for instance, when it is a painting), or else on or in the base of the work (for instance, when it is a statue or a three-dimensional creation positioned on a base or on a support). In this way the transmitter device can be transported with the work whereto it is associated; this solution is particularly advantageous, for instance, in the case of works destined to be exhibited in temporary and/or itinerant shows.

### Brief Description of Drawings

The invention shall now be further described, by way of non limiting example, with reference to the accompanying drawings, in which:
- Figure **1** shows, in the form of a first functional block diagram, the general organisation of a system according to the invention,
- Figure **2** shows, also in the form of a block diagram, the possible organisation of a receiver-transmitter device destined to be included in a system according to the invention, and
- Figure **3** is a flow chart illustrating the operation of the system according to the invention.

### Best mode for Carrying Out the Invention

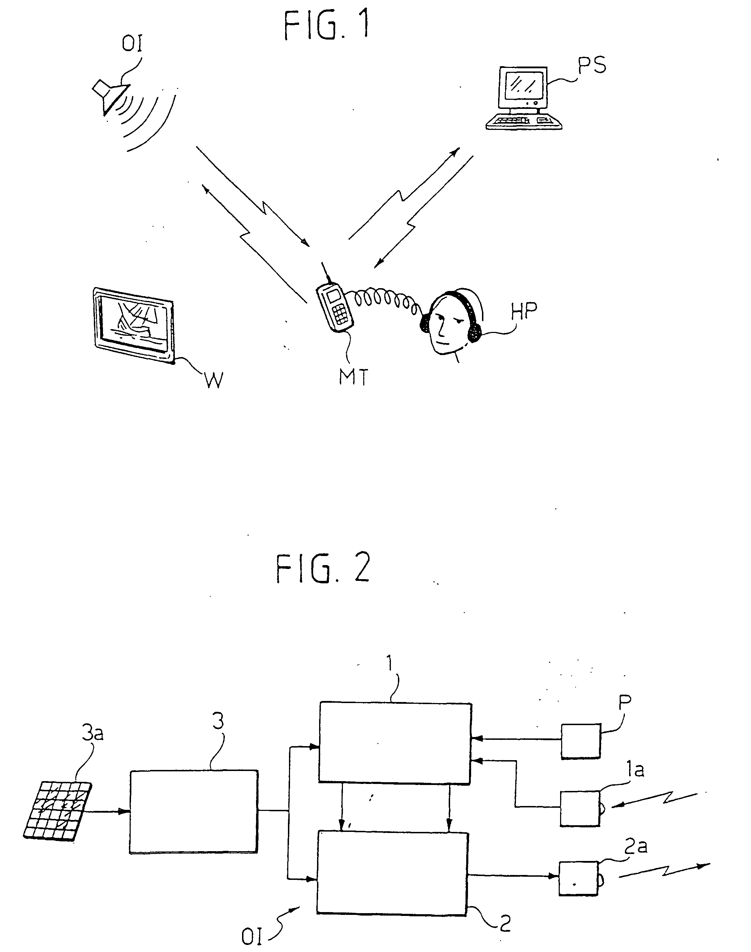

As Figure 1 schematically shows, the system according to the invention comprises three essential elements:
- for each work W that benefits from the service, a (receiver-)transmitter device OI that provides the information of
   i) identification of work W whereto the device itself is associated; and
   ii) location of the information message or messages pertaining to the work in question,
- for each user or group of users that employ the service together, a mobile user terminal MT, and
- a database PS containing the information messages about the various works W whereto the various devices OI are associated.

In its possible most complete configuration, the system according to the invention is destined to involve a number of works W that, in general, can be any and - preferably - is very high. It can comprise, for instance, the set of all works viewable in an exhibition site (for instance, a museum), in a location (for instance an art town) or - in a yet more extensive application form - in a region or even in a whole nation.

Each device OI in the system preferably has the basic architecture shown in Figure 2, where three main functional blocks can be distinguished, i.e.:
- a reception block 1,
- a transmission block 2, and
- a power supply block 3.

In preferred fashion, the device OI can operate in two distinct modes, i.e.:
- an information provision mode, in which the device OI provides, upon interrogation made by the mobile terminal MT, the information required to employ the service, and
- a programming mode, in which the device OI is able to be programmed to receive from an appropriate apparatus P (of a known type) the information that the same device is destined to provide to the terminals MT according to the mode described above.

The reception block 1 is usually always active and ready to receive, for instance, two coded strings that cause the device OI to operate selectively according to one of the modes recalled above.

The first information dispensing mode is activated by the terminal MT, which sends to the block 1, through a communication channel 1a, a coded string.

Once it receives the string, the reception block 1 stores it and compares it with at least two reference strings.

After verifying consistency with the string associated to the first operating mode, the reception block 1 provides the transmission block 2 with a transmission enabling signal. Consequently, the transmitter 2 sends to the portable terminal MT the signal containing the information required to employ the service. This takes place through an additional communication channel indicated as 2a.

Preferably, the second operating mode described above (programming mode) is activated by the programming apparatus P, usually supplied to the service provider and configured in the form of an apparatus substantially similar to the remote control of a television set, video cassette recorder, DVD reader, etc.

The programming apparatus or device P sends to the device OI a coded string which is stored and compared (at least in part) with the two reference strings. While the representation of Figure 2 refers in itself to two different channels, this usually occurs through the same communication channel 1a used for the interrogation by the user terminal MT.

After verifying consistency between the string received from the apparatus P and the string associated to the second operating mode, the reception block 1 enables the recording (in an appropriate memory - not shown but of a known type - situated inside it) of the reply or replies to be provided to the user terminal MT when the latter interrogates the OI device.

If the device OI is not located in proximity to an electrical line that allows it to be powered from the mains, the power supply block 3 usually has, associated therewith, a module 3a for the generation of energy, such as a solar cell panel. The latter converts the light power provided by ambient light (internal or external) into electrical energy to load the buffer batteries used to power the other two blocks 1 and 2 and any elements associated thereto.

The functional blocks 1, 2 and 3 do not exhibit, in themselves, any particular circuit characteristics, so they can be obtained using several current technological solutions.

By way of example, the reception block 1 can be obtained according to diagrams similar to those of the infrared receivers present in modern television sets activated by remote control.

The transmission block 2 can be obtained according to diagrams similar to those of the remote control of television sets. The transmitter circuit 2a, normally in standby conditions (with minimal energy absorption level) is enabled by the enabling system coming from the receiver block 1 when the arrival of a predefined string is recognised.

The design of the blocks 1 and 2 in any case takes into account the criterion of minimising electrical absorption, in particular when the power supply block 3 derives the energy needed for its operation from a solar cell panel 3a.

The latter is obtained according to diagrams similar to those of the solar cell power supplies used for some road signs and some weather stations in remote locations (for instance mountainous sites). In case of application in an indoors environment, the selection of the photo-voltaic cells can be optimised in relation to the luminous spectrum of ambient light.

Response times connected with enabling the transmitter OI are not critical and can have values of a few hundreds of milliseconds, wholly compatible with current technologies.

In regard to the selection of transmission carriers, the solution described above is ideally suited to the use of wireless technologies (with optical and/or radio frequency signal) also of a sophisticated type such as the Bluetooth technology.

The mobile user terminal MT function can be performed by a normal cell phone provided with an infrared transmission and reception system (or, referring to a quite widely used solution in last-generation mobile telephones, with a Bluetooth communication module) able to be activated through appropriate functions present in the menu.

Voice messages are normally heard through earphones or HP headsets. Naturally, in conjunction with the voice messages, the described system can provide for the transmission of graphic messages reproduced on a screen associated to the MT terminal (for instance when the MT terminal is constructed according to UMTS technology).

In regard instead to the realisation of the database PS, the service provider generally has a server that is able to send over a wireless connection (GSM, GPRS, UMTS, etc.) the voice/video/data message corresponding to the description of the individual work W.

The two-way correspondence between work W and identifying code provided by the device OI to the user terminal MT is assured by the database PS. The specific criteria for the realisation of said database correspond in themselves to principles that are wholly known in the art, such as not to require a detailed description herein, also because they are not relevant in themselves for purposes of understanding and implementing the invention.

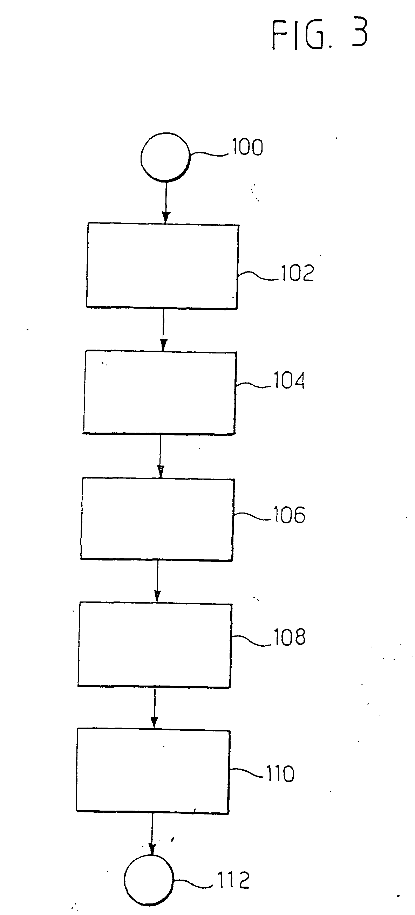

The procedures for obtaining the described service substantially correspond to the flow chart shown in Figure 3.

Reference can be made, by way of non limiting example, to the possible use of a system according to the invention in an exhibition site constituted by a museum. It will therefore be assumed that to each of the works W exhibited in the museum (or, at least, to each of the works W for which the service according to the invention is provided) are associated respective devices OI.

It will be appreciated that this solution is also usable in museum contexts in which the works W are exhibited according to a rather dense disposition, for instance with paintings exhibited in mutually superposed orders or ranks.

Starting from a transaction start step 100, in a step indicated as 102 the mobile terminal MT sends an interrogation message to the device OI. This takes place through the channel (e.g. infrared and/or Bluetooth channel) 1a.

After receiving the request, in a step 104 the device OI sends on the channel 2a towards the mobile terminal MT a reply essentially constituted by:
- a code (or in any case, an information string: the terms are used herein as mutually equivalent) identifying the work W whereto the device OI is associated (according to bi-univocal criteria), and
- a code identifying the position of the related description (or information message) in the database PS.

If the database PS resides on a remote server, the latter code contains, in addition to the information that allows to locate the message (or messages) pertaining to the work W involved on each occasion in the database PS, also the information required for setting up the connection on the physical - typically mobile radio - network that allows the mobile terminal MT to connect to the server where the database PS resides.

If the database PS simply resides on a memory support associated to the mobile terminal MT, the code in question simply indicates the address that allows to locate on said resident memory support the message or messages pertaining to the work W in question.

After receiving the requested information from the device OI, in a subsequent step indicated as 106 the mobile terminal MT "searches" the database PS.

If the database resides on a remote server, this is accomplished by executing (according to known criteria) the call to the specific service of the provider whereon the database PS resides and providing it with the identifying code of the work W of interest.

By way of reply, the database PS sends to the mobile terminal MT the message containing the required description. This is provided to the user according to the modes described above (voice message -for instance synthesised in the terminal MT itself starting from a data file through a synthesis application available in the terminal MT itself - possibly complemented by images/video) in a step indicated as 108. This is followed by a transaction completion step 110, in which the connection between the mobile terminal MT and the database PS is closed.

The transaction then evolves towards a final step 112. Although the example of embodiment described in detail above provides for the transmitter device OI associated to the work to provide directly to the portable terminal MT the address of the remote site whereto it is to connect to obtain the comment, it is important once again to stress that, in other possible embodiments of the invention, the portable terminal MT can also do without an address provided by the transmitter device and access, for instance, to a description of the work contained on a memory device associated to the terminal MT itself, or to retrieve the information from a remote site, but at a different address from the one provided by the transmitter devices and defined autonomously by the terminal.

## Claims

1. System for providing information messages pertaining to objects (W) included in an exhibition context, comprising:
- a first database (PS) containing, for each of said objects (W), at least one corresponding information message,
- for each object (W), a respective device (OI) configured for transmitting a first code representative of an identifying code for identifying said object (W), and
- at least a mobile terminal (MT) configured to:
- receive, from said device (OI), said first code, and
- selectively access, based on said first code, information messages pertaining to said objects (W) contained in said first database (PS),
wherein
- the respective device (OI) is further configured for transmitting to said mobile terminal (MT) a second code representative of a first site wherein said first database (PS) is located;
- the mobile terminal (MT) is configured for selectively using said second code for addressing said first site
wherein said first database (PS) is located; or
defining a different address to be used for addressing a further site having said different address;
whereby by selectively using said first and second code or said first code it is possible for the terminal to access said first database or a complementary one at said further site;
and wherein said device (OI) is configured to operate in a programming mode in which said device (OI) receives from the exterior said messages containing said first and second code in view of their storage.

2. System as claimed in claim 1, **characterised in that** said device (OI) is a receiver-transmitter device configured to emit said first and second code following the reception (2) of an interrogation message starting from said mobile terminal (MT).

3. System as claimed in claim 1 or claim 2, **characterised in that** said device (OI) communicates with said mobile terminal (MT) by means of infrared technology.

4. System as claimed in claim 1, **characterised in that** said device (OI) communicates with said mobile terminal (MT) by means of radio frequency technology.

5. System as claimed in claim 1, **characterised in that** said device (OI) communicates with said mobile terminal (MT) by means of Bluetooth technology.

6. System as claimed in any of the previous claims, **characterised in that** said device (OI) bears associated thereto a power supply set (3) which exploits the luminous energy of the environment.

7. System as claimed in any of the previous claims, **characterised in that**:
- said mobile terminal (MT) is a telephone of a mobile telephone network.

8. System as claimed in any of the previous claims, **characterised in that** said first database (PS), at least in part, resides on a memory support associated to said mobile terminal (MT).

9. System as claimed in any of the previous claims, **characterised in that** said information messages are voice messages.

10. System as claimed in claim 9, **characterised in that** said mobile terminal (MT) comprises a voice synthesis function, so that said voice messages are received by said mobile terminal starting from said first database (PS) or said complementary database in the form of data messages able to be synthesised into voice messages in said mobile terminal (MT) exploiting said voice synthesis function.

11. System as claimed in any of the previous claims, **characterised in that** said information messages are multimedia messages.

12. System as claimed in any of the claims 1 through 11, **characterised in that** said device (OI) is connected to the respective object, so that it is transportable therewith.

13. Transmitter device configured to perform the function of said device (OI) within a system as claimed in any of the claims 1 through 12.

14. Computer program product able to be loaded into a memory of a computer and comprising portions of software code which, when the product is run on said computer, configures said computer as a mobile terminal (MT) for operation within a system as claimed in any of the claims 1 through 12.

15. Method for providing information services in an exhibition context through information messages pertaining to objects (W) included in the exhibition context comprising the steps of
- providing a first database (PS) containing, for each of said objects (W), at least one corresponding information message,
- transmitting a first code representative of an identifying code for identifying said object (W) to a mobile terminal (MT) through a respective device (OI) associated to each of said objects (W) for selectively accessing, based on said first code, the information messages pertaining to said objects (W) contained in said first database (PS);
- transmitting to said mobile terminal (MT) through said respective device (OI) a second code representative of a first site wherein said first database (PS) is located; and
- selectively addressing said first site wherein said first database (PS) is located or a further site having a different address by selectively using said first and second code or said first code; whereby the terminal is configured for selectively accessing said first database or a complementary one at said further site,
wherein said device (OI) is configured to operate in a programming mode in which said device (OI) receives from the exterior said messages containing said first and second code in view of their storage.

## Patentansprüche

1. System zur Lieferung von Informationsmitteilungen betreffend Objekte (W), die in einer Ausstellungsumgebung enthalten sind, umfassend:
- eine erste Datenbank (PS), die für jedes der Objekte (W) wenigstens eine entsprechende Informationsmitteilung enthält,
- fürjedes Objekt (W), eine auf es bezogene Vorrichtung (OI), die zum Senden eines ersten Codes, der repräsentativ für einen Identifizierungscode zum Identifizieren des Objekts (W) ist, konfiguriert ist, und
- wenigstens ein mobiles Endgerät (MT), das dazu konfiguriert ist,
- von der Vorrichtung (OI) den ersten Code zu empfangen und
- selektiv auf der Basis dieses ersten Codes auf Informationsmitteilungen, die sich auf die Objekte (W) beziehen und in der ersten Datenbank (PS) enthalten sind, zuzugreifen,
wobei
- die jeweilige Vorrichtung (OI) weiterhin dazu konfiguriert ist, an das mobile Endgerät (MT) einen zweiten Code zu senden, der repräsentativ für einen ersten Standort ist, an der die erste Datenbank (PS) positioniert ist;
- das mobile Endgerät (MT) dazu konfiguriert ist: selektiv den zweiten Code zum Adressieren des ersten Standorts, an dem die erste Datenbank (PS) positioniert ist, zu verwenden; oder eine andere, zum Adressieren eines weiteren Standorts, der eine andere Adresse hat, zu verwendende Adresse zu definieren;
wobei durch selektiven Gebrauch des ersten und des zweiten Codes oder des ersten Codes es für das Endgerät möglich ist, auf die erste Datenbank oder eine komplementäre Datenbank an dem weiteren Standort zuzugreifen; und wobei die Vorrichtung (OI) dazu konfiguriert ist, in einem programmierenden Modus zu arbeiten, in dem diese Vorrichtung (OI) von außen die Mitteilungen empfängt, die den ersten und den zweiten Code im Hinblick auf deren Speicherung enthalten.

2. System nach Anspruch 1, **dadurch gekennzeichnet, daß** die Vorrichtung (OI) eine Empfänger-Sender-Vorrichtung ist, die dazu konfiguriert ist, auf den Empfang (2) einer Anfragenachricht, die vom mobilen Endgerät (MT) ausgeht, den ersten und den zweiten Code zu emittieren.

3. System nach Anspruch 1 oder 2, **dadurch gekennzeichnet, daß** die Vorrichtung (OI) mit dem mobilen Endgerät (MT) über Infrarottechnologie kommuniziert.

4. System nach Anspruch 1, **dadurch gekennzeichnet, daß** die Vorrichtung (OI) mit dem Endgerät (MT) über Funkfrequenztechnologie kommuniziert.

5. System nach Anspruch 1, **dadurch gekennzeichnet, daß** die Vorrichtung (OI) mit dem mobilen Endgerät (MT) über Blue-Tooth-Technologie kommuniziert.

6. System nach einem der vorhergehenden Ansprüche, **dadurch gekennzeichnet, daß** die Vorrichtung (OI), ihr zugeordnet, eine Stromversorgungs-Baugruppe (3) trägt, die die Lichtenergie der Umgebung ausnützt.

7. System nach einem der vorhergehenden Ansprüche, **dadurch gekennzeichnet, daß**
- das mobile Endgerät (MT) ein Telefon eines Mobiltelefonnetzes ist.

8. System nach einem der vorhergehenden Ansprüche, **dadurch gekennzeichnet, daß** die erste Datenbank (PS), zumindest teilweise, auf einem Speicherträger angeordnet ist, der dem mobilen Endgerät (MT) zugeordnet ist.

9. System nach einem der vorhergehenden Ansprüche, **dadurch gekennzeichnet, daß** die Informationsmitteilungen Stimmenmitteilungen sind.

10. System nach Anspruch 9, **dadurch gekennzeichnet, daß** das mobile Endgerät (MT) eine Stimmensynthesefunktion umfaßt, so daß die Stimmenmitteilungen ausgehend von der ersten Datenbank (PS) oder der komplementären Datenbank vom mobilen Endgerät in Form von Datennachrichten empfangen werden, die im mobilen Endgerät (MT) unter Auswertung der Stimmensynthesefunktion zu Stimmenmitteilungen synthetisiert werden können.

11. System nach einem der vorhergehenden Ansprüche, **dadurch gekennzeichnet, daß** die Informationsmitteilungen Multimedia-Mitteilungen sind.

12. System nach einem der Ansprüche 1 bis 11, **dadurch gekennzeichnet, daß** die Vorrichtung (OI) mit dem jeweiligen Objekt verbunden ist, so daß sie mit ihm transportiert werden kann.

13. Sendervorrichtung, die dazu konfiguriert ist, die Funktion der Vorrichtung (OI) innerhalb eines Systems auszuführen, wie es in einem der Ansprüche 1 bis 12 beansprucht ist.

14. Computerprogrammprodukt, das in einen Speicher eines Computers ladbar ist und Teile eines Programmcodes umfaßt, der, wenn das Produkt auf dem Computer läuft, den Computer als mobiles Endgerät (MT) zum Betrieb innerhalb eines Systems, wie es in einem der Ansprüche 1 bis 12 beansprucht wird, konfiguriert.

15. Verfahren zum Zurverfügungstellen von Informationsdiensten in einer Ausstellungsumgebung über Informationsmitteilungen, die sich auf Objekte (W) beziehen, die in der Ausstellungsumgebung enthalten sind, umfassend die Schritte:
- Bereitstellen einer ersten Datenbank (PS), die für jedes der Objekte (W) wenigstens eine entsprechende Informationsmitteilung enthält,
- Senden eines ersten Codes, der repräsentativ für einen identifizierenden Code zum Identifizieren des Objekts (W) ist, zu einem mobilen Endgerät (MT) über eine jeweilige Vorrichtung (OI), die jedem der Objekte (W) zugeordnet ist, für einen selektiven Zugriff auf der Grundlage des ersten Codes zu den Informationsmitteilungen, die sich auf die Objekte (W) beziehen und die in der ersten Datenbank (PS) enthalten sind;
- Senden eines zweiten Codes, der repräsentativ für einen ersten Standort ist, an dem die erste Datenbank (PS) positioniert ist, über die jeweilige Vorrichtung (OI) zum mobilen Endgerät (MT); und
- selektives Anadressieren entweder des ersten Standorts, an dem die erste Datenbank (PS) positioniert ist, oder eines anderen Standorts mit einer anderen Adresse, durch selektiven Gebrauch entweder des ersten und des zweiten Codes oder des ersten Codes; wobei das Endgerät dazu konfiguriert ist, selektiv auf die erste Datenbank oder auf eine komplementäre Datenbank an dem weiteren Standort zuzugreifen,
wobei die Vorrichtung (OI) dazu konfiguriert ist, in einem programmierenden Modus zu arbeiten, in dem sie von außen die Nachrichten empfängt, die den ersten und den zweiten Code im Hinblick auf ihre Speicherung enthalten.

## Revendications

1. Système pour délivrer des messages d'informations concernant des objets (W) se trouvant dans un contexte d'expositions, comportant :
- une première base de données (PS) contenant, pour chacun desdits objets (W), au moins un message d'informations correspondant,
- pour chaque objet (W), un dispositif respectif (OI) configuré pour transmettre un premier code représentatif d'un code d'identification pour identifier ledit objet (W), et
- au moins un terminal mobile (MT) configuré pour :
- recevoir, depuis ledit dispositif (OI), ledit premier code, et
- accéder sélectivement, sur la base dudit premier code, à des messages d'informations concernant lesdits objets (W) contenus dans ladite première base de données (PS),
dans lequel
- le dispositif respectif (OI) est de plus configuré pour transmettre audit terminal mobile (MT) un second code représentatif d'un premier emplacement dans lequel se trouve ladite première base de données (PS),
- le terminal mobile (MT) est configuré pour sélectivement :
utiliser ledit second code pour adresser ledit premier emplacement dans lequel se trouve ladite première base de données (PS), ou
définir une adresse différente à utiliser pour adresser un autre emplacement ayant ladite différente adresse,
de manière à ce qu'en utilisant sélectivement lesdits premier et second codes ou ledit premier code, il est possible au terminal d'accéder à ladite première base de données ou à une base de données complémentaire au niveau dudit autre emplacement,
et dans lequel ledit dispositif (OI) est configuré pour fonctionner dans un mode de programmation dans lequel ledit dispositif (OI) reçoit depuis l'extérieur lesdits messages contenant lesdits premier et second codes en vue de leur mémorisation.

2. Système selon la revendication 1, **caractérisé en ce que** ledit dispositif (OI) est un dispositif émetteur-récepteur configuré pour émettre lesdits premier et second codes suite à la réception (2) d'un message d'interrogation émanant dudit terminal mobile (MT).

3. Système selon la revendication 1 ou là revendication 2, **caractérisé en ce que** ledit dispositif (OI) communique avec ledit terminal mobile (MT) par l'intermédiaire d'une technologie à infrarouge.

4. Système selon la revendication 1, **caractérisé en ce que** ledit dispositif (OI) communique avec ledit terminal mobile (MT) par l'intermédiaire d'une technologie de radiofréquence.

5. Système selon la revendication 1, **caractérisé en ce que** ledit dispositif (OI) communique avec ledit terminal mobile (MT) par l'intermédiaire d'une technologie sans fil Bluetooth.

6. Système selon l'une quelconque des revendications précédentes, **caractérisé en ce que** ledit dispositif (OI) porte associé dessus un ensemble d'alimentation en énergie (3) qui exploite l'énergie lumineuse de l'environnement.

7. Système selon l'une quelconque des revendications précédentes, **caractérisé en ce que** :
- ledit terminal mobile (MT) est un téléphone d'un réseau de téléphonie mobile.

8. Système selon l'une quelconque des revendications précédentes, **caractérisé en ce que** ladite première base de données (PS), au moins en partie, réside sur un support de mémoire associé audit terminal mobile (MT).

9. Système selon l'une quelconque des revendications précédentes, **caractérisé en ce que** lesdits messages d'informations sont des messages vocaux.

10. Système selon la revendication 9, **caractérisé en ce que** ledit terminal mobile (MT) comporte une fonction de synthèse vocale, de sorte que lesdits messages vocaux sont reçus par ledit terminal mobile en émanant depuis ladite première base de données (PS) ou ladite base de données complémentaire sous la forme de messages de données pouvant être synthétisés sous forme de messages vocaux dans ledit terminal mobile (MT) en exploitant ladite fonction de synthèse vocale.

11. Système selon l'une quelconque des revendications précédentes, **caractérisé en ce que** lesdits messages d'informations sont des messages multimédia.

12. Système selon l'une quelconque des revendications 1 à 11, **caractérisé en ce que** ledit dispositif (OI) est connecté à l'objet respectif, ce qui fait qu'il est transportable avec celui-ci.

13. Dispositif émetteur configuré pour exécuter la fonction dudit dispositif (OI) dans un système selon l'une quelconque des revendications 1 à 12.

14. Produit de programme informatique pouvant être chargé dans une mémoire d'un ordinateur et comportant des parties de code logiciel qui, lorsque le produit est exécuté sur ledit ordinateur, configure ledit ordinateur en tant que terminal mobile (MT) pour fonctionner dans un système selon l'une quelconque des revendications 1 à 12.

15. Procédé pour fournir des services d'informations dans un contexte d'expositions par l'intermédiaire de messages d'informations concernant des objets (W) se trouvant dans le contexte d'expositions, comportant les étapes consistant à :
- fournir une première base de données (PS) contenant, pour chacun desdits objets (W), au moins un message d'informations correspondant,
- transmettre un premier code représentatif d'un code d'identification pour identifier ledit objet (W) à un terminal mobile (MT) par l'intermédiaire d'un dispositif respectif (OI) associé à chacun desdits objets (W) pour accéder sélectivement, sur la base dudit premier code, aux messages d'informations concernant lesdits objets (W) contenus dans ladite première base de données (PS),
- transmettre audit terminal mobile (MT) via ledit dispositif respectif (OI) un second code représentatif d'un premier emplacement dans lequel se trouve ladite première base de données (PS), et
- adresser sélectivement ledit premier emplacement dans lequel se trouve ladite première base de données (PS) ou un autre emplacement ayant une adresse différente en utilisant sélectivement lesdits premier et seconde codes ou ledit premier code, de manière à ce que le terminal soit configuré pour accéder sélectivement à ladite première base de données ou à une base de données complémentaire au niveau dudit autre emplacement,
dans lequel ledit dispositif (OI) est configuré pour fonctionner dans un mode de programmation dans lequel ledit dispositif (OI) reçoit depuis l'extérieur lesdits messages contenant lesdits premier et second codes en vue de leur mémorisation.
